Europäisches Patentamt

European Patent Office

Office européen des brevets

Veröffentlichungsnummer: **0 292 676**

A2

# EUROPÄISCHE PATENTANMELDUNG

Anmeldenummer: 88105524.8

Int. Cl.⁴ **B29C 61/06** , **B29C 61/00**

Anmeldetag: 07.04.88

Priorität: 25.05.87 DE 3717618

Veröffentlichungstag der Anmeldung:
30.11.88 Patentblatt 88/48

Benannte Vertragsstaaten:
AT BE CH DE ES FR GB GR IT LI NL SE

Anmelder: **KABELMETAL ELECTRO GMBH**
**Kabelkamp 20 Postfach 260**
**D-3000 Hannover 1(DE)**

Erfinder: **Marx, Karl-Heinz, Ing.**
**Zehntweg 25**
**D-3008 Garbsen 9(DE)**
Erfinder: **Voigt, Hermann-Uwe, Dr. rer. nat.**
**Seilerstrasse 49**
**D-3060 Stadthagen(DE)**

Wärmerückstellbarer Gegenstand und Verfahren zu seiner Herstellung.

Bei einem wärmerückstellbaren Gegenstand aus einem vernetzten Polyolefin, insbesondere ein Schlauch bzw. eine Manschette zum Umhüllen eines Substrates ist der Vernetzungsgrad der dem zu umhüllenden Substrat zugekehrten Wandungsbereich deutlich höher als der Vernetzungsgrad der dem Substrat abgekehrten Wandungsbereiche.

EP 0 292 676 A2

## Wärmerückstellbarer Gegenstand und Verfahren zu seiner Herstellung

Die Erfindung betrifft einen wärmerückstellbaren Gegenstand aus einem vernetzten Polyolefin, insbesondere ein Schlauch bzw. eine Manschette zum Umhüllen eines Substrates.

Aus der DE-PS 2900518 ist eine Umwickelmuffe für beispielsweise Spleißverbindungen von elektrischen Kabeln bekannt, die um die Spleißverbindung herumgelegt und nach dem Verschließen ihrer Längskanten durch Wärmezufuhr auf die Verbindung niedergeschrumpft wird. Die Aufbringung von Wärme erfolgt in der Regel durch eine weiche Flamme, kann aber auch durch einen Heißluftstrom erfolgen.

Es hat sich nun gezeigt, daß bei einer solchen Umwickelmuffe bei unsachgemäßer Behandlung beim Niederschrumpfen Risse entstehen können, welche die Manschette unbrauchbar machen.

Aus der EP-OS 0116393 ist ein wärmerückstellbarer Gegenstand bekannt, bei dem ein Gewebe zwischen zwei Schichten aus Polymermaterial eingebettet ist. Das Gewebe besteht aus einer Vielzahl von quer zur Schrumpfrichtung verlaufenden Fäden, z. B. aus Glasfasern sowie einer Vielzahl von in Schrumpfrichtung verlaufenden, mit den Glasfasern verwebten, Fäden aus wärmeschrumpfbarem Material. Bei Erwärmung eines solchen wärmeschrumpfbaren Gegenstandes - schrumpfen die in Schrumpfrichtung verlaufenden Fäden, wobei die Deckschichten aus polymerem Material bei der Schrumpftemperatur so weich werden, daß sie die Schrumpfung nicht behindern. Bei diesen bekannten wärmerückstellfähigen Gegenständen besteht die Gefahr, daß das Geflecht bzw. Gewebe sich innerhalb der Schichten verlagert. So hat beispielsweise das Geflecht, wenn der wärmeerholbare Gegenstand zum Rohr geformt ist, das Bestreben, seinen Durchmesser zu verringern. Dient der wärmeerholbare Gegenstand beispielsweise dazu, einen runden Gegenstand, wie beispielsweise ein elektrisches Kabel, zu umhüllen, so besteht die Gefahr, daß das Gewebe infolge Durchmesserverringerung in die darunter liegende Schicht eindringt. Der mehrschichtige Aufbau dient im wesentlichen einer erhöhten Reißfestigkeit des wärmeerholbaren Gegenstandes.

Der vorliegenden Erfindung liegt die Aufgabe zugrunde, die Reißfestigkeit eines wärmerückstellbaren Gegenstandes zu erhöhen, ohne daß die Gefahr einer Verlagerung einer Verstärkungseinlage besteht. Diese Aufgabe wird bei einem wärmerückstellbaren Gegenstand der eingangs erwähnten Art dadurch gelöst, daß der Vernetzungsgrad der dem zu umhüllenden Substrat zugekehrten Wandungsbereiche deutlich höher ist als der Vernetzungsgrad der dem Substrat abgekehrten Wandungsbereiche. Bei dem Gegenstand nach der Lehre der Erfindung wird die Schrumpfkraft im wesentlichen von den Wandungsbereichen mit dem höheren Vernetzungsgrad aufgebracht. Die relativ geringe Reißfestigkeit dieser Schicht wird dadurch eliminiert bzw. überwunden, daß die niedriger vernetzte bzw. nur anvernetzte Deckschicht die örtlichen Überhitzungen, wie sie bei unsachgemäßem Umgang mit der Flamme entstehen können, in ihren Auswirkungen abmildert bzw. die - schädlichen Auswirkungen verhindert.

Mit besonderem Vorteil beträgt der Vernetzungsgrad der dem zu umhüllenden Substrat zugekehrten Wandungsbereiche zwischen 30 und 40 %, vorzugsweise 35 %, und der Vernetzungsgrad der abgekehrten Schicht zwischen 5 und 30 %. Die Wandung des Gegenstandes kann dabei aus mehreren Schichten bestehen, sie kann jedoch auch einschichtig aufgebaut sein, wobei dann vorteilhafterweise der Vernetzungsgrad über die Wandung gesehen kontinuierlich abnimmt. Nach einer weiteren vorteilhaften Ausgestaltung der Erfindung ist auf der dem Substrat zugekehrten Oberfläche des Gegenstandes eine Schicht befindlich, deren Vernetzungsgrad zwischen 5 und 25 % beträgt. Bei dieser Ausgestaltung ist die die wesentliche Schrumpfkraft aufbringende Schicht von zwei weniger stark vernetzten Schichten umgeben. Dadurch wird der Vorteil erzielt, daß die rissauslösende Wirkung von Spitzen, Kerben oder anderen Oberflächenunregelmäßigkeiten des Substrates abgemildert werden. Die Wanddicke der höher vernetzten Schicht beträgt mindestens 40 %, vorzugsweise mindestens 60 % der gesamten Wanddicke des Gegenstandes. Mit besonderem Vorteil beträgt die Wanddicke der mittleren höher vernetzten Schicht zwischen 0,2 und 0,6 mm, vorzugsweise 0,25 bis 0,4 mm und die Wanddicke der angrenzenden Schichten zwischen 0,05 und 0,25 mm, vorzugsweise zwischen 0,1 und 0,15 mm. Die höher vernetzte Schicht weist eine Schrumpftemperatur von 75 bis 105 °C, vorzugsweise von 80 - 90 °C, und die außengelegene Schicht eine Schrumpftemperatur von 100 - 140 °C, vorzugsweise von 120 - 130 °C auf. Dadurch wird die durch die höhere Wanddicke und den dadurch langsameren Wärmeübergang mögliche geringere Schrumpfgeschwindigkeit kompensiert. Man erreicht dies zweckmäßigerweise dadurch, daß die höher vernetzte Schicht aus einer Mischung aus einem Polyäthylen-Äthylvinylacetat copolymer mit einem Vinylacetatanteil von 15 - 40 %, vorzugsweise von 25 - 30 % besteht. Die dem Substrat abgekehrte niedriger vernetzte Schicht besteht vorteilhafterweise aus einem Polyäthylen-/Copolymerverschnitt, dem ggf. Füllstoffe zugesetzt sind. Es besteht jedoch auch die Möglichkeit, daß die dem Substrat abgekehrte äußere, niedriger vernetzte Deckschicht aus Hochdruckpolyäthylen bzw. linearem Hochdruckpolyäthylen im Verschnitt mit Copolymerisaten und ggf. Füllstoffen besteht. Die dem Substrat zugekehrte, niedriger vernetzte Schicht besteht vorteilhafterweise aus einem Copolymerisat mit einem Vinylacetatanteil von mindestens 25 % oder einem Acrylatcopolymer mit einem Acrylatgehalt von mindestens 25 %. Durch diese Maßnahme wird eine gute Adhäsion zu polaren Schmelzklebermaterialien gewährleistet, so daß eine Oberflächenaktivierung vor der Aufbringung dieser Schmelzkleberschicht entfallen kann. Mit besonderem Vorteil ist in jeder der genannten Schichten Polyäthylen enthalten, welches mit Silanen gepfropft ist und insofern bei Anwesenheit von Feuchtigkeit vernetzbar ist. Dadurch wird erreicht, daß durch Kovernetzung eine gute Grenzflächenhaftung zwischen den einzelnen Schichten erreicht wird. Die dem Substrat zugekehrte Oberfläche des Gegenstandes kann dann noch mit einer Schicht aus einem Heißschmelzkleber versehen werden.

Der wesentliche Vorteil des Gegenstandes gemäß der Lehre der Erfindung ist darin zu sehen, daß bei überhitzungsbedingten Rissen die von der Oberfläche ausgehen, eine Rißfortpflanzung durch die Grenzfläche zur Mittelschicht nicht stattfinden kann. Darüber hinaus wird durch den niedrigeren Spannungswert infolge des hohen thermoplastischen Anteils der Deckschichten die Rißfortpflanzung durch Energiedissipation verhindert.

Die Erfindung betrifft weiterhin ein Verfahren zur Herstellung eines wärmerückstellbaren Gegenstandes, bei dem der geformte Gegenstand vernetzt, erwärmt, im erwärmten Zustand aufgeweitet und im aufgeweiteten Zustand abgekühlt wird. Das Verfahren ist dadurch gekennzeichnet, daß der Schichtenaufbau vor dem Vernetzen vollzogen wird. Hier bieten sich mehrere Möglichkeiten an, so kann vorteilhafterweise der Verbund der einzelnen Schichten durch Kaschieren miteinander hergestellt werden. Eine andere Möglichkeit besteht darin, daß der Schichtaufbau durch Koextrusion hergestellt wird. Das letztgenannte Verfahren bietet sich für Schichten an, die aus Polyäthylen mit gepfropften Silanen bestehen. Eine andere Möglichkeit der Herstellung des Gegenstandes gemäß der Lehre der Erfindung besteht darin, daß man bei Verwendung einer Vernetzung mittels energiereicher Strahlen die Eindringtiefe so steuert, daß über den Querschnitt gesehen der Vernetzungsgrad mit steigender Entfernung von der Strahlenquelle abnimmt. Bei Verwendung einer peroxidischen Vernetzung setzt man vorteilhafterweise dem Kunststoff zumindest zwei Peroxide mit unterschiedlich hoher Zerfallstemperatur zu und führt die für den Zerfall der Peroxide erforderliche Wärme dem Gegenstand von einer Seite zu. Auf der "heißeren Seite des Gegenstandes" - vorteilhafterweise verwendet man dieses Verfahren für die Herstellung von Bändern - zerfallen auch die Peroxide mit höherer Zerfallstemperatur und führen zu einem hohen Vernetzungsgrad der heißeren Schichten. Auf der der Wärmequelle gegenüberliegenden Seite des Bandes reicht die Temperatur lediglich zur Zersetzung der Peroxide mit niedrigerer Zerfallstemperatur aus. Diese Bereiche weisen demgemäß einen niedrigeren Vernetzungsgrad auf. Eine andere Möglichkeit besteht darin, daß man bei Verwendung einer peroxidischen Vernetzung den Gegenstand durch Koextrusion herstellt und die Materialströme die Peroxide in unterschiedlich großen Mengen enthalten. Auch auf diese Weise gelangt man zu unterschiedlich hohen Vernetzungsgraden.

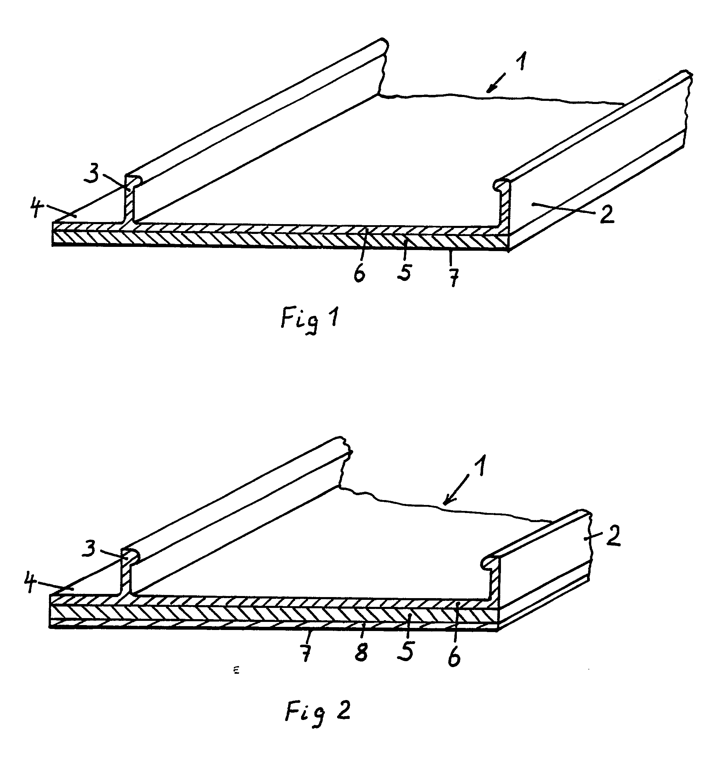

Die Erfindung ist anhand der in den Fig. 1 und 2 schematisch dargestellten Ausführungsbeispiele näher erläutert.

Die Erfindung ist im nachfolgenden anhand einer Schrumpfmanschette beschrieben, läßt sich aber ebenso anwenden auf Schrumpfschläuche bzw. auch schrumpfbare Wickelbänder.

In der Fig. 1 ist die perspektivische Ansicht einer Schrumpfmanschette 1 darstellt, welche zwei Stege 2 und 3 sowie eine Lasche 4 aufweist. Nach dem Umlegen der Schrumpfmanschette 1 um das zu umhüllende Substrat liegt der Steg 2 oberhalb der Lasche 4 eng an dem Steg 3 an, so daß über die Stege 2 und 3 in nicht dargestellter Weise eine Verschlußschiene oder andere geeignete Verschlußelemente geschoben werden können.

Die Schrumpfmanschette 1 besteht gemäß der Lehre der Erfindung aus einer Schicht 5 sowie einer mit dieser Schicht 5 fest verbundenen Schicht 6. Die Schicht 5 besteht aus einem vernetzten Kunststoff mit einem Vernetzungsgrad von mindestens 30 % und übernimmt zum wesentlichen Anteil die elastische Verformung beim Schrumpfen, d. h. sie zieht bei Erwärmung am stärksten. Die Schicht 6 besteht ebenfalls aus einem vernetzten Kunststoff, ist aber deutlich niedriger vernetzt, d. h. sie weist einen Vernetzungsgrad von höchstens 25 % auf. Durch den hohen thermoplastischen Anteil der Schicht 6 wird eine Fortpflanzung eines Risses durch Energiedissipation verhindert. Die Schicht 5 kann an ihrer der Schicht 6 abgekehrten Oberfläche noch mit einer Heißschmelzkleberschicht 7 beschichtet sein.

Bei dem in der Fig. 2 dargestellten Ausführungsbeispiel ist zusätzlich zwischen der Heißschmelzkleberschicht 7 und der Schicht 5 eine weitere Schicht 8 vorgesehen, welche ebenfalls einen deutlich niedrigeren Vernetzungsgrad als die Schicht 5 hat. Der Vernetzungsgrad der Schicht 8 sollte ebenfalls in der Größenordnung von 20 - 25 % liegen, d. h. auch diese Schicht 8 weist einen hohen thermoplastischen Anteil auf. Geht beispielsweise von der Oberfläche des nicht dargestellten umhüllten Substrates eine Kerbwirkung, beispielsweise durch ein Sandkorn oder eine scharfe Kante, aus, so wird diese in den meisten Fällen von der Schicht 8 durch elastische Verformung kompensiert. Tritt dennoch ein Riß auf, so pflanzt sich dieser lediglich bis zur Grenzschicht zwischen den Schichten 8 und 5 fort. Der genannte Effekt beruht auf der Beobachtung, daß die Rißanfälligkeit mit steigendem Vernetzungsgrad zunimmt. Die niedriger bzw. nur anvernetzten Deckschichten 6 bzw. 8 mildern örtliche Überhitzungen, wie sie bei unsachgemäßem Umgang mit der Flamme beim Schrumpfen entstehen können, ab.

Die Schicht 5 könnte beispielsweise aus folgender Mischung zusammengesetzt sein:

Grundmischung:

Lineares Polyethylen höherer Dichte ($\rho$ = 0,94 g/cm$^3$, Schmelzindex 190/2.16 = 0,2 - 0,5) 40 - 60 Teile

Ethylen-Copolymerisat mit 10 - 20 Gew % Acrylat bzw. Vinyl-Azetat 30 - 40 Teile

Azetylenruß 5 - 15 Teile

Calziumstearat 0,1 Teile

Alterungsschutz (2.2.4 - Trimethyldihydrochinolin) 0,5 Teile

Zu 100 Teilen Grundmischung werden zugegeben:

Vinyltrimethoxi-silan 0,5 - 1,0 Teile

Dicumylperoxid 0,03 - 0,05 Teile

Dibutylzinndilaurat 0,05 Teile

Anstelle des linearen Polyethylens höherer Dichte kann auch ein lineares Polyethylen niedrigerer Dichte (LLDPE) oder ein Hochdruckpolyethylen (LDPE) eingesetzt werden.

Alternativ kann die Schicht 5 jedoch auch folgende Zusammensetzung aufweisen:

Ethylencopolymerisat mit 20 - 28 Gew % Ethylen-Vinyl-Azetat

(EVA) 100 Teile

Azetylenruß 5 - 10 Teile

Vinyltrimethoxisilan 0,4 - 1,2 Teile

Dicumylperoxid 0,04 Teile

Katalysator 0,05 Teile

Eine solche Mischung schrumpft bei Temperaturen von 75 - 90 °C.

Die Schicht 6 besteht vorteilhafterweise aus folgender Mischung:

Ethylen-Homopolymer (Hochdruck-Polyethylen) 100 Teile

Azetylenruß 2,5 Teile

Flammschutzmittel 1,0 - 2,5 Teile

Antioxidationsmittel 1,0 Teile

Vinyltrimethoxisilan 1,0 - 1,5 Teile

Dicumylperoxid 0,06 Teile

Katalysator 0,05 Teile

Die Schicht 8 ist zweckmäßigerweise wie folgt zusammengesetzt:

Ethylen-Vinylazetat-Copolymer mit 10 - 20 Gew % Vinylazetatanteil 100 Teile

Azetylenruß 2,5 Teile

Antioxidant 0,5 Teile

Vinyltrimethoxisilan 0,8 - 1,0 Teile

Dicumylperoxid 0,04 Teile

Katalysator 0,05 Teile

Obwohl der dargestellte Gegenstand auch durch Kaschieren herstellbar ist, bietet sich jedoch das Verfahren der Koextrusion an, d. h., die Schichten 5 und 6 bzw. 5,6 und 8 werden in einem Arbeitsgang durch Extrudieren hergestellt, indem im Mundstück oder kurz davor Materialströme unterschiedlicher Mischungszusammensetzung vereinigt werden. Für die Vernetzung sind alle bekannten Vernetzungsarten möglich. So ist es beispielsweise möglich, den in der Fig. 1 dargestellten Gegenstand durch energiereiche Strahlen zu vernetzten, indem man die Eindringtiefe der Strahlen so steuert, daß die Schicht 5 stark vernetzt und die Schicht 6 weniger stark vernetzt wird.

Auch eine peroxydische Vernetzung ist möglich, wobei man der Schicht 5 einen höheren Peroxydanteil zumischt und den Peroxydanteil in der Schicht 6 und der Schicht 8 deutlich geringer hält, so daß diese Schichten einen Vernetzungsgrad von höchstens 25 % erreichen. Eine andere Möglichkeit, den unterschiedlichen Vernetzungsgrad durch peroxydische Vernetzung zu erzielen besteht darin, daß man der Kunststoffmischung Peroxyde mit unterschiedlich hoher Zerfallstemperatur bzw. Zerfallsgeschwindigkeit zumischt. Bei Zuführung der für die Vernetzung erforderliche Wärme führt man diese dem Gegenstand von der Schicht 5 aus zu, so daß diese höher erwärmt und damit stärker vernetzt gegen die Schicht 6 auf Grund der deutlich niedrigeren Temperatur bei der Vernetzung weniger stark vernetzt.

Als besonders vorteilhaft hat sich jedoch die sog. Siloxanvernetzung erwiesen. Bei dieser Vernetzungsart werden die Polyäthylenanteile mit Silanen gepfropft und die Vernetzung in Gegenwart von Feuchtigkeit durchgeführt. Da sowohl die Schicht 5 als auch die Schichten 6 und 8 nach dem Siloxanvernetzungsverfahren vernetzt werden, entsteht an ihren Grenzflächen durch Kovernetzung eine sehr gute Grenzflächenhaftung zwischen den einzelnen Schichten 5,6 und 8.

**Ansprüche**

1. Wärmerückstellbarer Gegenstand aus einem vernetzten Polyolefin, insbesondere ein Schlauch bzw. eine Manschette zum Umhüllen eines Substrates, dadurch gekennzeichnet, daß der Vernetzungsgrad der dem zu umhüllenden Substrat zugekehrten Wandungsbereiche deutlich höher ist, als der Vernetzungsgrad der dem Substrat abgekehrten Wandungsbereiche.

2. Wärmerückstellbarer Gegenstand nach Anspruch 1, dadurch gekennzeichnet, daß der Vernetzungsgrad der dem zu umhüllenden Substrat zugekehrten Wandungsbereiche zwischen 30 und 40 %, vorzugsweise 35 %, und der Vernetzungsgrad der abgekehrten Schicht zwischen 5 und 30 %, vorzugsweise 20 %, beträgt.

3. Wärmerückstellbarer Gegenstand nach Anspruch 1 oder 2, dadurch gekennzeichnet, daß auf der dem Substrat zugekehrten Oberfläche des Gegenstandes eine Schicht befindlich ist, deren Vernetzungsgrad zwischen 5 und 30 %, vorzugsweise 25 %, beträgt.

4. Wärmerückstellbarer Gegenstand nach Anspruch 1 oder einem der folgenden, dadurch gekennzeichnet, daß die Wanddicke der höher vernetzten Schicht mindestens 40 %, vorzugsweise mindestens 60 %, der gesamten Wanddicke des Gegenstandes beträgt.

5. Wärmerückstellbarer Gegenstand nach Anspruch 3 oder 4, dadurch gekennzeichnet, daß die Wanddicke der mittleren, höher vernetzten Schicht, zwischen 0,2 und 0,6 mm, vorzugsweise 0,25 bis 0,4 mm, und die Wanddicke der angrenzenden Schichten zwischen 0,05 und 0,25 mm, vorzugsweise zwischen 0,1 und 0,15 mm beträgt.

6. Wärmerückstellbarer Gegenstand nach Anspruch 3 oder einem der folgenden, dadurch gekennzeichnet, daß die höher vernetzte Schicht eine Schrumpftemperatur von 75 bis 105 °C, vorzugsweise von 80 bis 90 °C, und die jeweils angrenzende Schicht eine Schrumpftemperatur von 100 - 140 °C, vorzugsweise von 120 -130 °C aufweist.

7. Wärmerückstellbarer Gegenstand nach Anspruch 1 oder einem der folgenden, dadurch gekennzeichnet, daß die höher vernetzte Schicht aus einer Mischung aus einem Polyäthylen-Äthylvinylacetat copolymer mit einem Vinylacetantanteil von 15 - 30 %, vorzugsweise von 20 - 28 %, besteht.

8. Wärmerückstellbarer Gegenstand nach Anspruch 1 oder einem der folgenden, dadurch gekennzeichnet, daß die niedriger vernetzte Schicht auf einen Polyäthylen-/Copolymerverschnitt, dem ggf. Füllstoffe zugesetzt sind, besteht.

9. Wärmerückstellbarer Gegenstand nach Anspruch 1 oder einem der folgenden, dadurch gekennzeichnet, daß die niedriger vernetzte Schicht auf Hochdruckpolyäthylen bzw. linearen Hochdruckpolyäthylen im Verschnitt mit Copolymerisaten und ggf. Füllstoffen besteht.

10. Wärmerückstellbarer Gegenstand nach Anspruch 1 oder einem der folgenden, dadurch gekennzeichnet, daß die höher vernetzte Schicht aus einem Copolymerisat mit einem Vinylacetatanteil von mindestens 25 % oder einem Acrylat-Copolymer mit einem Acrylatgehalt von mindestens 25 % besteht.

11. Wärmerückstellbarer Gegenstand nach Anspruch 1 oder einem der folgenden, dadurch gekennzeichnet, daß die Schichten aus mit Silanen gepfropftem Polyäthylen bestehen.

12. Wärmerückstellbarer Gegenstand nach Anspruch 1 oder einem der folgenden, dadurch gekennzeichnet, daß die dem Substrat zugekehrte Oberfläche des Gegenstandes mit einer Schicht aus Heißschmelzkleber versehen ist.

13. Verfahren zur Herstellung eines wärmerückstellbaren Gegenstandes, bei dem der geformte Gegenstand vernetzt, erwärmt, im erwärmten Zustand aufgeweitet und im aufgeweiteten Zustand gekühlt wird, dadurch gekennzeichnet, daß der Schichtenaufbau vor dem Vernetzen vollzogen wird.

14. Verfahren nach Anspruch 13, dadurch gekennzeichnet, daß die Schichten durch Kaschieren miteinander verbunden werden.

15. Verfahren nach Anspruch 13, dadurch gekennzeichnet, daß der Schichtenaufbau durch Koextrusion hergestellt wird.

16. Verfahren nach Anspruch 13, dadurch gekennzeichnet, daß bei Verwendung einer Vernetzung mittels energiereicher Strahlen die Eindringtiefe so gesteuert wird, daß über den Querschnitt gesehen der Vernetzungsgrad mit steigender Entfernung von der Strahlungsquelle abnimmt.

17. Verfahren nach Anspruch 13 oder einem der folgenden, dadurch gekennzeichnet, daß bei Verwendung einer peroxydischen Vernetzung dem Kunststoff zumindest 2 Peroxyde mit unterschiedlich hoher Verfallstemperatur zugesetzt werden und daß die für den Verfall der Peroxyde erforderliche Wärme dem Gegenstand von einer Seite zugeführt wird.

18. Verfahren nach Anspruch 13 oder einem der folgenden, dadurch gekennzeichnet, daß bei Verwendung einer peroxydischen Vernetzung der Gegenstand durch Koextrusion hergestellt wird und die Materialströme die Peroxyde in unterschiedlich großer Menge enthalten.

Fig 1

Fig 2